# EUROPEAN PATENT APPLICATION

(11) **EP 2 711 052 A1**
(43) Date of publication of application: **26.03.2014**
(21) Application number: 12185520.9
(22) Date of filing: 21.09.2012
(51) Int. Cl.: A62C 3/07, F16K 15/00

(54) **A valve arrangement for a motor vehicle fire suppression system**

(71) Applicant: Autoliv Development AB, 44783 Vårgårda (SE)
(72) Inventor: Sturk, David, 413 20 Göteborg (SE)
(74) Representative: Parry, Simon James

(57) **Abstract**

There is disclosed a valve arrangement (1) provided on a motor vehicle (44, 57) as part of a fire suppression system. The valve arrangement has a first inlet (6) in fluid communication with an on-board source (36) of fire suppression medium and an outlet (8) in fluid communication with an on-board fire suppression target such as a battery (55) or capacitor arrangement in the case of an electric or hybrid motor vehicle (44). The first inlet and the outlet are arranged for fluid communication to permit a primary flow of said fire suppression medium from the on-board source to the target. The valve arrangement also has a second inlet (7) configured for connection to a separate source of fire suppression medium external to the vehicle (such as a fire appliance operated by emergency services). There is a valve (9) associated with the second inlet and which has a closed configuration in which it seals the second inlet, the valve being actuable so as to adopt an open configuration effective to fluidly interconnect the second inlet and the outlet and thereby permit a secondary flow of fire suppression medium from the external source to the target via the outlet.

## Description

The present invention relates to a valve arrangement for a motor vehicle fire suppression system. More particularly, the invention relates to a valve arrangement provided on a motor vehicle as part of a fire suppression system.

The invention is particularly suited for use in electrically powered or so-called hybrid motor vehicles, although the invention may also find application in more conventional vehicles powered by internal combustion engines.

In view of increasing concerns over the environmental impact of motor vehicles powered by internal combustion engines, there is now increased interest and importance in providing so-called "cleaner" motor vehicles which produce less pollution in the form of gases which are deemed harmful to the environment. Accordingly, it is now becoming more and more common to provide motor vehicles which are powered electrically, at least during periods of their operation. For example, it has been proposed to provide electric vehicles which are driven by a large electrical motor drawing its power from a rechargeable battery.

It has also been proposed to provide so-called "hybrid" motor vehicles which typically combine an efficient internal combustion engine with an electric motor. Hybrid vehicles of this type are configured to be driven by the electric motor whenever possible or convenient, but are driven by the internal combustion engine when the propulsive power offered by the motor is insufficient to meet the instant performance demand, for example because the demand simply exceeds the performance limits of the motor, or because the source of electrical energy from which the motor draws its power contains insufficient charge. In such an arrangement, the motor typically draws its electric power from either a rechargeable battery or a series of capacitors, with the battery or capacitors being arranged to charge from an alternator connected to the engine when the combustion engine is running.

As will be appreciated, electrically powered vehicles, and so-called hybrid vehicles of the general type described above therefore require relatively large electrical energy storage units, such as batteries or capacitors, in order to provide sufficient electrical power for the propulsive motor. Accordingly, such storage units are typically configured to be very high voltage (typically approximately 300V) and to store a very significant amount of electrical energy (typically between 2 - 10 kWh), and as such represent a significant electrical hazard, particularly in the event of the vehicle being involved in a crash, or an internal short-circuit occurring within the battery.

Electrical storage devices such as capacitors or batteries of the type described above can become extremely hot in the event of a short-circuit occurring either internally, or externally as a result of a crash, and hence represent a risk of fire or explosion in such circumstances.

There have therefore been prior proposals to try and address some of these risks, and in particular to address the fire risk. For example, vehicles have been proposed previously which are provided with an on-board fire suppression system in which a source of fire suppression medium such as an extinguishing fluid is provided in the form of pressured gas in a pressure vessel carried on or in the vehicle. Such arrangements are configured for actuation in the event of an actual or perceived risk of fire being detected and operate to direct a flow of fire suppression medium from the source to the vehicle's battery, capacitor, or to the vehicle's internal combustion engine in the case of a non-electric/hybrid vehicle. EP2216849A discloses an arrangement of this general type, in which an on-board supply of fire suppression medium is released via a valve into the housing of a battery.

However, it will be appreciated that it is generally desirable to manufacture motor vehicles which are as lightweight as practicable, particularly from the point of view of environmental and performance concerns. The need to make vehicles which are lightweight means that it is often necessary to limit the amount of fire suppression medium which is carried on-board the vehicle itself. This issue is particularly significant in the case of electric or hybrid vehicles which generally carry a very large energy reserve (e.g. electric vehicles can typically carry batteries which weigh 300kg or more).

Another problem associated with typical electric or hybrid motor vehicles in the event of a fire involving the vehicles' batteries or capacitors is that the batteries or capacitors are usually located remotely from a vehicle's propulsive motor in the "engine bay". For example, it is common to mount such batteries or capacitors in the region of the floor of the vehicle, or in other similarly inaccessible spaces depending on the architecture of the particular model of vehicle. Location of the batteries or capacitors in such inaccessible places can make it very difficult indeed for fire crews or other emergency services attending a vehicle fire to gain access to the source of the fire in order to extinguish it.

It is an object of the present invention to provide an improved valve arrangement for a fire-suppression system.

According to the present invention, there is provided a valve arrangement provided on a motor vehicle as part of a fire suppression system, the valve arrangement having: a first inlet in fluid communication with an on-board source of fire suppression medium; and an outlet in fluid communication with an on-board fire suppression target; the first inlet and the outlet being arranged for fluid communication to permit a primary flow of said fire suppression medium from the on-board source to the target, the valve arrangement being characterised by a second inlet configured for connection to a separate source of fire suppression medium external to the vehicle, there being a valve associated with the second inlet and which has a closed configuration in which it seals the second inlet, the valve being actuable so as to adopt an open configuration effective to fluidly interconnect the second inlet and the outlet and thereby permit a secondary flow of fire suppression medium from the external source to the target via the outlet.

Preferably, said valve is a check valve configured to permit the flow of fluid through the second inlet only in a direction towards the outlet.

Advantageously, the check valve comprises a valve member which is spring-biased towards a sealing position in which it closes the valve.

Preferably, said second inlet and its associated valve are positioned downstream of the first inlet relative to the direction of flow of said fire suppression medium from the on-board source to the target.

Conveniently, the first inlet and the outlet are initially fluidly isolated from one another by a further valve which is actuable to fluidly interconnect the first inlet and the outlet to thereby permit said primary flow of fire suppression medium from the on-board source to the target.

Preferably, said further valve comprises a membrane provided across said first inlet, the valve being configured for actuation via rupture of said membrane.

Advantageously, said membrane is configured to rupture under a predetermined threshold of pressure applied to the membrane by fire suppression medium from said on-board source.

Conveniently said further valve comprises a pyrotechnic charge arranged to rupture the membrane and thereby actuate the valve.

Preferably, said on-board target includes a battery or capacitor.

Advantageously said on-board target is an engine bay.

Conveniently, the valve arrangement comprises two said second inlets, each being configured for independent connection to a said separate source of fire suppression medium external to the vehicle.

Preferably, the valve arrangement is provided on the motor vehicle such that each said second inlet is associated with a respective side of the vehicle.

Advantageously, the or each said second fluid inlet is fluidly connected to a connector provided on the exterior of the motor vehicle for connection to a said external source of fire suppression medium.

So that the invention may be more readily understood, and so that further features thereof may be appreciated, embodiments of the invention will now be described by way of example with reference to the accompanying drawings in which:
Figure 1 is a schematic cross-sectional view taken through a valve arrangement in accordance with the present invention;
Figure 2 is a schematic cross-sectional view showing the valve arrangement of figure 1 installed within part of a fire suppression system on a motor vehicle;
Figure 3 is a schematic illustration of the fire suppression system installed in an electric or hybrid motor vehicle;
Figure 4 is a schematic cross-sectional view corresponding generally to that of figure 1, showing the valve arrangement in an actuated condition; and
Figure 5 is a schematic illustration showing a fire suppression system incorporating a valve arrangement of the present invention installed in the engine bay of motor vehicle powered by an internal combustion engine.

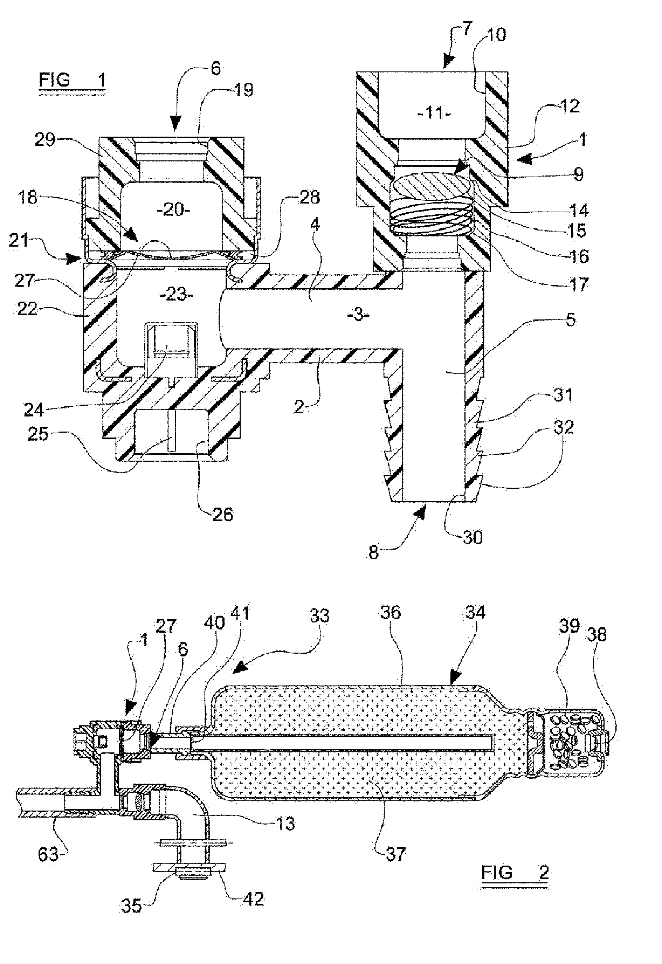

Turning now to consider figure 1 in more detail, there is illustrated a cross-sectional view taken through a valve arrangement 1 in accordance with an embodiment of the present invention. The valve arrangement 1 includes a housing 2 in the form of a manifold defining an internal flow duct 3. The flow duct 3 has an asymmetric T-shaped configuration defining first section 4 and a second section 5, the two sections 4, 5 each having primary axes arranged substantially orthogonal to one another. As will therefore be appreciated, in the particular arrangement illustrated the second section 5 of the duct 3 makes an angle of approximately 90 degrees to the first section 4, there being a 90 degree bend provided between the two. However, for reasons of ensuring a smooth flow of fluid through the duct 3, it is proposed that in other embodiments of the invention (not illustrated) the two sections 4, 5 of the duct 3 will be arranged so that their main axes make an obtuse angle to one another.

The valve arrangement 1 has two fluid inlets 6, 7 and a single fluid outlet 8. The first fluid 6 is provided for fluid connection to the end of the first duct section 4 opposite to the second duct section 5. The second fluid inlet is provided for fluid connection to the end of the second duct section 5 proximate the first duct section, and the outlet 8 is provided at the opposite end of the second duct section 5, remote from the first section 4.

The second inlet 7 is associated with a valve indicated generally at 9. In more detail, it will be noted from figure 1 that the second inlet 7 is actually provided in the form of an inlet port 10 provided at one end of a flow passage 11 defined through a valve housing 12 attached to or integral with the manifold housing 2. The flow passage 11 through the valve housing is thus shown fluidly connected to the second section 5 of the flow duct 3.

The valve housing 12 is configured, in the region of the inlet port 10, for connection to a pipe or hose 13 (shown in Figure 2). Internally, the flow passage 11 has a stepped configuration and defines a peripheral valve seat 14 which presents an annular valve surface towards the flow duct 3 inside the manifold housing 2. Immediately adjacent the valve seat 14, and located between the valve seat 14 and the flow duct 3, there is a larger diameter section of the flow passage 11 in which there is provided a valve member 15 arranged for sealing engagement against the valve seat 14 around its periphery. The valve member 15 is biased and urged towards sealing engagement against the valve seat 14 by a spring arrangement, such as the helically wound compression spring 16 illustrated schematically in figure 16 and which is arranged so as to bear against a shoulder 17 provided towards the end of the flow passage 11. As will thus be appreciated, the valve member 15 is urged towards an initial closed position illustrated in figure 1 by the spring 16 so as to seal against the valve seat 14 and prevent the passage of fluid out of the manifold housing 2 from within the duct 3 towards the second fluid inlet 7. However, in the event of a fluid pressure being applied to the upper side of the valve member 15, for example as a result of the flow of fluid along the connected hose or pipe 13, then the valve member 15 will be displaced against the biasing force of the spring 16 so as to lift off the valve seat 14, thereby opening the valve 9 to permit the flow of fluid through the inlet 7 and into the duct 3. As will also be appreciated, the valve 9 described above operates as a one-way check valve and so is configured to close under the reverse flow of fluid from the duct 3 towards the inlet 7.

The first inlet 6 is associated with a further valve indicated generally at 18. In more detail, it will be noted from figure 1 that the first inlet 6 is actually provided in the form of an inlet port 19 at one end of a flow passage 20 defined through a further valve housing 21 attached to or integral with the manifold housing 2 at the free end of the first section 4 of the duct 3. The flow passage 20 through the valve housing 21 is thus shown fluidly connected to the free end of the first section 4 of the flow duct 3.

In more detail, the arrangement of figure 1 is configured such that the further valve housing 21 is a two-part arrangement comprising a valve body 22 formed as an integral part of the manifold housing 2 at the end of the first section 4 of the duct 3. The valve body 22 defines a large internal chamber 23 which is directly fluidly connected to the duct 3. At the bottom of the chamber 23 there is mounted a valve actuator in the form of a pyrotechnical charge 24. The pyrotechnic charge 24 is electrically connected to electrical contacts 25 provided inside a connector opening 26 which is formed at the bottom end of the valve body and which is configured to receive an electrical connector in order to electrically connect the actuator to a firing circuit in the motor vehicle (not shown).

Spaced above the pyrotechnic actuator 24, and extending fully across the flow passage 20 and the chamber 23, there is provided a rupturable sealing membrane 27. The membrane is associated with a peripheral sealing washer 28 and is clamped around its periphery between the lower valve body 22 and an upper connector piece 29 which may, for example, be arranged for threaded connection with the valve body 22.

The membrane 27 illustrated in the embodiment of figure 1 is configured to remain intact and hence to seal the valve 21 against a significant fluid pressure applied at the first inlet 6, but is arranged to rupture under the action of the pyrotechnic charge 24 when actuated.

The fluid outlet 8 is formed as a simple open inlet port 30 at the end of the second duct portion 5 opposite the second inlet 7. In the preferred arrangement illustrated, the region of the manifold housing 2 defining the outlet 8 is configured to take the form of a hose-receiving nipple 31 having a series of spaced apart peripheral gripping formations 32 such as serrations formed around its outer surface in a manner known *per se.*

Figure 2 illustrates the valve arrangement of figure 1 installed within part of a vehicle's fire suppression system, indicated generally at 33. In addition to the valve arrangement 1, figure 2 shows an on-board source of fire suppression medium 34 carried by the vehicle, and a connector 35 for connection to a separate source of fire suppression medium external of the vehicle (not shown).

The on-board source of fire suppression medium is shown provided as a pressure vessel 36 containing a volume of fire suppression medium in the form of a compressed gas 37 such as Carbon Dioxide or the like. Additionally, the pressure vessel is shown comprising a pyrotechnic charge 38 and a suitable propellant 39 which is shown in the form or a plurality of dry pellets.

The pressure vessel 36 is fluidly connected to the first inlet 6 via length of hose or other suitable fluid conduit 40. As will be appreciated, with the sealing membrane 27 initially intact, the pressure vessel 36 is thus initially fluidly isolated from the chamber 23 of the valve arrangement 18 and the flow duct 3 within the manifold housing 2. Nevertheless, it is possible to provide the outlet 41 of the pressure vessel 36 with its own seal or valve.

The connector 35 is shown mounted within the outer skin of a motor vehicle, such as, for example in a body panel 42 of the vehicle. The connector 35 is configured for cooperation with a fire hose of a type used by local fire-service appliances and is hence configured for connection to a fire-engine or other appliance as used by such services. Behind the body panel 42, the connector 35 is fluidly connected to the second inlet 7 of the valve arrangement 1 via the hose or pipe 13 already mentioned above.

The outlet 8 of the valve arrangement 1 is simply connected to a length of hose 43 (for example by being received inside the central bore of the hose as illustrated) in a conventional manner. As will be described below, the hose 43 runs from the valve arrangement 1 to a fire-suppression target on-board the vehicle.

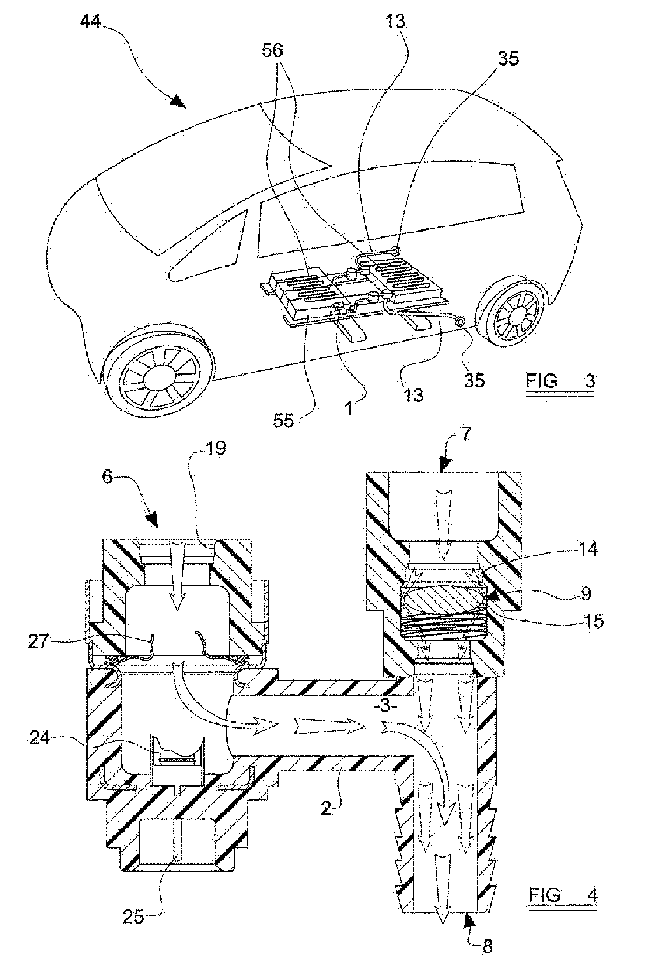

Figure 3 shows an example installation of the fire suppression system 33 in a small electric vehicle 44. The vehicle has a large source of electrical energy in order to drive its propulsive motor. The source of electrical energy is provided in the form of a large battery 55 made up of a plurality of cells in a known manner. In the arrangement illustrated, the battery 55 is mounted beneath the floor of the vehicle's structure, as is common for such vehicles.

The vehicle shown in figure 3 is actually provided with two external connectors 35, each of which is located on a respective side of the vehicle and mounted in a body panel of the vehicle for easy access by fire crew personnel in the event of an emergency involving the vehicle. Each connector 35 is fluidly connected by a length of hose or pipe 13 to the second inlet 7 of the valve arrangement 1. However, it is to be appreciated that in alternative arrangements falling within the scope of the invention, the valve arrangement 1 may comprise two second inlets 7, each associated with and connected to a respective external connector 35.

Additionally, the vehicle includes the on-board source 34 of fire suppression medium, which in this arrangement is also provided beneath the floor of the vehicle structure alongside the battery 55. The outlet 8 of the valve arrangement is connected to a hose which, in turn, is connected to an array of distribution pipes 56 running around the battery 55 and which have a plurality of spray nozzles (not illustrated0 to spray fire suppression medium over the battery 55.

Operation of the valve arrangement 1 in the event of an actual fire or perceived risk of fire will now be described with reference to figures 1 to 3 discussed above, but also with reference to figure 4.

During normal operation of the vehicle, the valves 18, 9 associated with the first and second inlets 6, 7 will remain closed. However, in the event that a fire detection device on-board the motor vehicle detects a risk of fire, or an actual fire in the region of the battery 55 (for example by detecting a rapid or otherwise abnormal rise in temperature, or even in the event of a crash being detected by one or more crash sensors), an actuation signal will be sent to the pyrotechnic actuator 24 via the electrical connectors 25. The pyrotechnic charge 24 will thus be fired which will produce a sudden shock wave which in turn will rupture the sealing membrane 27 provided across the flow passage 20 associated with the first inlet 6, as illustrated schematically in figure 4.

Rupture of the sealing membrane 27 thus opens up the flow passage 20 through the valve provided in association with the first inlet 6, thereby fluidly coupling the on-board source 34 of fire suppression medium and the flow duct 3 within the manifold housing 2. The fire-suppression medium is thus released for flow through the first section 4 of the flow duct 3, around the bend at the end, through the second section 5 and out through the outlet 8 (the flow being illustrated schematically by the solid arrows in figure 4) for flow along the connected hose 43, and the distribution pipes and is ultimately sprayed over and around the battery 55.

It is to be appreciated that due to the configuration of the valve 9 associated with the second inlet 7, and in particular to due to its configuration as a check-valve, it will prevent the outflow of the on-board fire suppression medium through the second inlet 7.

It is envisaged that the volume of fire suppression medium provided within the vessel 36 defining the on-board source will be relatively small, in order to minimise the overall weight of the fire-suppression system 33. Nevertheless, it is intended that the on-board volume of fire suppression medium carried by the vehicle 44 will be sufficient to extinguish small fires in the region of the battery, and at least control larger, more serious fires until emergency services are able to reach the vehicle 44 to provide additional fire-fighting capability.

When emergency services are able to reach the vehicle 44, it is proposed that fire crew personnel may connect an external fire hose from their appliance to the or each external connector 35, and pump a supplementary flow of fire suppression medium into the vehicle via second inlet 7 of the valve arrangement. Such a rapid flow of fluid into the second inlet 7 of the valve arrangement will displace the valve member 15 from its valve seat 14, against the biasing force of the spring 16, thereby opening the valve 9 and permitting the flow of the external fire suppression medium directly into the second section 5 of the flow duct, and through the outlet 8 (as illustrated schematically by the arrows in phantom in figure 4) for supply to the distribution pipes 56 and hence targeted directly at the battery 55.

Whilst the invention has been described above in connection with an embodiment proposed for use in an electric or hybrid vehicle having a fire suppression target in the form of a large battery, it is to be appreciated that it can also be used in vehicles having a fire suppression target in the form of a capacitor, or other similar electrical energy source.

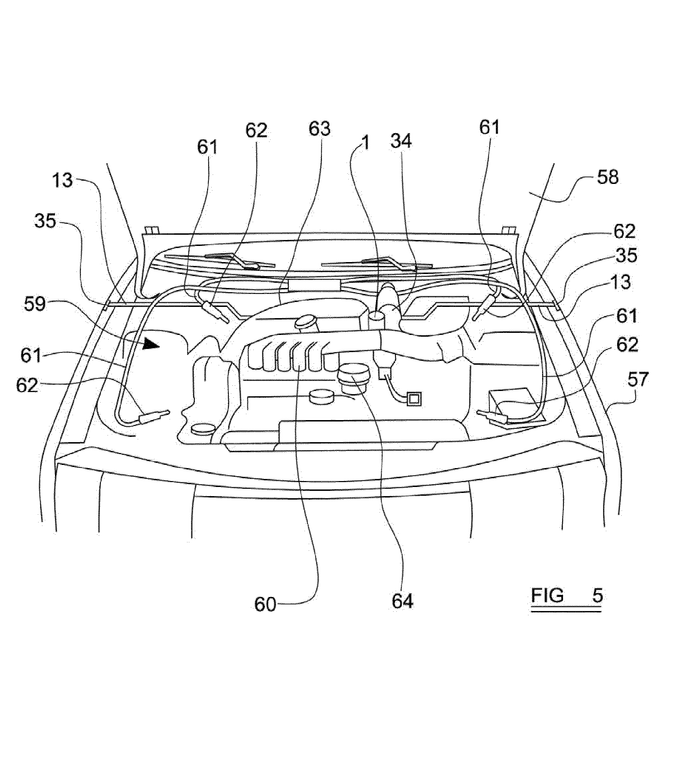

Furthermore, the invention can also find application in a more conventional motor vehicle of a type powered by an internal combustion engine, in which case it is proposed that the fire suppression system will be configured to direct and target fire suppression medium into the engine bay of the vehicle. Such an arrangement is illustrated schematically in figure 5 which depicts a motor vehicle 57 viewed from the front with its hood or bonnet 58 raised to provide access to the engine bay 59 beneath. The engine 60 is thus clearly presented.

The valve arrangement 1 of the present invention is shown mounted on or adjacent the engine 60, within the engine bay 59. The first inlet 6 of the valve arrangement (not clearly visible in figure 5) is connected to the on-board source 34 of fire suppression medium, which preferably takes the form of a pressure vessel 36 located in a convenient space adjacent the engine as illustrated.

The second inlet 7 (or optionally two such inlets) is connected to a pair of hoses 13, each of which is directed outwardly to a respective side of the vehicle where it connects to a respective external connector 35 mounted in a side panel 42 of the vehicle.

The outlet 8 of the valve arrangement 1 is connected to a network of hoses 61 which are arranged around the engine bay 59 and which each terminate in a spray nozzle 62 arranged to direct a spray or mist of suppression medium at the engine 60.

The pyrotechnic actuator 24 of the valve arrangement 1 is electrically connected via a wire 63 to a fire detection device 64 arranged adjacent the engine. As will therefore be appreciated, actuation and operation of the valve arrangement 1 in the event of a fire is exactly the same as described above in connection with the embodiment provided in an electric vehicle, the only difference being that the target for the fire suppression medium is the engine within the engine bay, rather than a battery or capacitor which may be located remotely from a propulsive motor.

It should also be appreciated, however, that whilst each of the embodiments described above operate via ignition of a pyrotechnic charge 24 to rupture the membrane 27 and hence actuate the valve associated with the first inlet 6, other actuating arrangements are also possible. For example in one such variant, it is proposed that the membrane 27 will simply be configured to rupture upon the application of a predetermined threshold of pressure on its upstream side by the fire suppression medium from the on-board source 36.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. A valve arrangement (1) provided on a motor vehicle (44, 57) as part of a fire suppression system, the valve arrangement having: a first inlet (6) in fluid communication with an on-board source (36) of fire suppression medium; and an outlet (8) in fluid communication with an on-board fire suppression target (55, 60); the first inlet (6) and the outlet (8) being arranged for fluid communication to permit a primary flow of said fire suppression medium from the on-board source (36) to the target (55, 60), the valve arrangement being **characterised by** a second inlet (7) configured for connection to a separate source of fire suppression medium external to the vehicle, there being a valve (9) associated with the second inlet (7) and which has a closed configuration in which it seals the second inlet (7), the valve (9) being actuable so as to adopt an open configuration effective to fluidly interconnect the second inlet (7) and the outlet (8) and thereby permit a secondary flow of fire suppression medium from the external source to the target (55, 60) via the outlet (8).

2. A valve arrangement according to claim 1, wherein said valve (9) is a check valve configured to permit the flow of fluid through the second inlet (7) only in a direction towards the outlet (8).

3. A valve arrangement according to claim 2, wherein the check valve (9) comprises a valve member (15) which is spring-biased towards a sealing position in which it closes the valve (9).

4. A valve arrangement according to any preceding claim, wherein said second inlet (7) and its associated valve (9) are positioned downstream of the first inlet (6) relative to the direction of flow of said fire suppression medium from the on-board source (36) to the target (55, 60).

5. A valve arrangement according to any preceding claim, wherein the first inlet (6) and the outlet (8) are initially fluidly isolated from one another by a further valve (21) which is actuable to fluidly interconnect the first inlet (6) and the outlet (8) to thereby permit said primary flow of fire suppression medium from the on-board source (36) to the target (55, 60).

6. A valve arrangement according to claim 5, wherein said further valve (21) comprises a membrane (27) provided across said first inlet (6), the valve (21) being configured for actuation via rupture of said membrane (27).

7. A valve arrangement according to claim 6, wherein said membrane (27) is configured to rupture under a predetermined threshold of pressure applied to the membrane by fire suppression medium from said on-board source (36).

8. A valve arrangement according to claim 6, wherein said further valve (21) comprises a pyrotechnic charge (24) arranged to rupture the membrane (27) and thereby actuate the valve (21).

9. A valve arrangement according to any preceding claim, wherein said on-board target includes a battery (55) or capacitor.

10. A valve arrangement according to any preceding claim, wherein said on-board target is an engine bay (59).

11. A valve arrangement according to any preceding claim, comprising two said second inlets (7), each being configured for independent connection to a said separate source of fire suppression medium external to the vehicle.

12. A valve arrangement according to claim 11 provided on the motor vehicle (44, 57) such that each said second inlet (7) is associated with a respective side of the vehicle.

13. A valve arrangement according to any preceding claim, wherein the or each said second inlet (7) is fluidly connected to a connector (35) provided on the exterior of the motor vehicle for connection to a said external source of fire suppression medium.
